# EUROPÄISCHE PATENTANMELDUNG

(11) **EP 2 169 137 A2**
(43) Veröffentlichungstag der Anmeldung: **31.03.2010**
(21) Anmeldenummer: 09011112.1
(22) Anmeldetag: 31.08.2009
(51) Int. Cl.: E04D 1/04, E04D 13/18

(54) **Dacheindeckung sowie Dachziegel für eine Dacheindeckung**

(30) Priorität: 09.09.2008 DE 102008046342
(71) Anmelder: Dachziegelwerke Nelskamp GmbH, 39326 Gross Ammensleben (DE)
(72) Erfinder: Bracht, Manfred, 32312 Lübbecke (DE)
(74) Vertreter: Busse & Busse

(57) **Zusammenfassung**

Die Erfindung bezieht sich auf eine Dacheindeckung (1) mit großflächigen Mulden-schiebeziegeln (2), insbesondere Zwei-Mulden-Schiebeziegeln, sowie mit Firstziegeln (11) zum firstseitigen Abschluss der Dacheindeckung (1) mit einem der Dacheindeckung (1) zugeordneten Vakuumsolarröhrenkollektor. Um eine Dacheindeckung mit einem Solarröhrenkollektor schaffen zu können, ist vorgesehen, dass zumindest ein Teil der Muldenschiebeziegel als Solarziegel (8) ausgebildet ist, denen Vakuumsolarröhren (7) des Vakuumsolarröhrenkollektors zugeordnet sind, welche parallel neben einer Überdeckungswulst (3) eines Solarziegels (8) jeweils mit Abstand angeordnet sind und einen Teil einer jeweiligen Mittelwulst (4) des Ziegels (8) bilden, wobei die Vakuumsolarröhren (7) Teil von mehreren, übereinander angeordneten Solarziegeln sind und in einen unterhalb von Firstziegeln (11) und/oder unterhalb von als Abdeckziegeln (9) ausgebildeten Muldeschiebeziegeln angeordneten Kollektorsammler (12) des Vakuumsolarröhrenkollektors münden (Fig. 1).

## Beschreibung

Die Erfindung bezieht sich zunächst auf eine Dacheindeckung mit großflächigen Muldenschiebeziegeln, insbesondere Zwei-Mulden-Schiebeziegeln, sowie mit Firstziegeln zum firstseitigen Abschluss der Dacheindeckung und mit einem der Dacheindeckung zugeordneten Vakuumsolarröhrenkollektor.

Des weiteren hat die Erfindung Dachziegel mit einer an einer seiner Seitenbereiche vorgesehenen Überdeckungswulst und einer an einem anderen Ende ausgebildeten Seitenverfalzung zum Gegenstand, wobei die Seitenfalzung mit einem Überdeckungswulst eines seitlich benachbart anzuordnenden Dachziegels eines Daches verbunden ist und wobei zwischen der Überdeckungswulst und der Seitenverfalzung zumindest ein weiterer Mittelwulstbereich und zwischen der Überdeckungswulst und dem Mittelwulstbereich sowie zwischen dem Mittelwulstbereich und der Seitenverfalzung jeweils Längsmulden ausgebildet sind.

Dacheindeckungen aus großflächigen Muldeschiebeziegeln sind in herkömmlicher Bauart oftmals mit Vakuumsolarröhrenkollektoren ausgestattet worden, die als separate Baueinheiten auf die Muldenschiebeziegel aufgesetzt wurden, z.B. zwecks Warmwasserbereitung eines mit der Dacheindeckung versehenen Hauses.

Derartige Vakuumsolarröhrenkollektoren arbeiten durchaus mit einem relativ guten Wirkungsgrad, sind aber in aller Regel insgesamt in einer dunklen Farbe gehalten, so dass die optische Gestaltung der Dacheindeckung beeinflusst ist. Sämtliche Teile des Vakuumröhrensolarkollektors wie Vakuumsolarröhren, Kollektorsammler, Anschlusselemente sind oberhalb der Muldenziegel angeordnet und nicht integraler Bestandteil der Dacheindeckung. Damit sind sämtliche Teile des Kollektors auch Witterungseinflüssen ausgesetzt.

Es ist Aufgabe der Erfindung, hier Abhilfe zu schaffen und eine Dacheindeckung zur Verfügung zu stellen, bei dem ein Vakuumsolarröhrenkollektor weitestgehend integraler Bestandteil der Dacheindeckung ist. Darüber hinaus sollen Dachziegel gefunden werden, die für die zuvor stehende Aufgabe in geeigneter Weise gestaltet sind und demzufolge für eine Dacheindeckung der eingangs genannten Art Verwendung finden können.

Zur Lösung dieser Aufgabe zeichnet sich die Dacheindeckung der eingangs genannten Art dadurch aus, dass zumindest ein Teil der Muldenschiebeziegel als Solarziegel ausgebildet ist, denen Vakuumsolarröhren des Vakuumsolarröhrenkollektors zugeordnet sind, welche parallel neben einer Überdeckungswulst jeweils mit Abstand angeordnet sind und Teil einer jeweiligen Mittelwulst des Ziegels bilden, wobei die Vakuumsolarröhren Teile von mehreren, übereinander angeordneten Solarziegeln sind und in einen unterhalb von Firstziegeln und/oder unterhalb von als Abdeckziegel ausgebildeten Muldenschiebeziegeln angeordneten Kollektorsammler des Vakuumsolarröhrenkollektors münden.

Damit ist eine Dacheindeckung zur Verfügung gestellt, bei der die Vakuumsolarröhren von außen her optisch die Mittelwulst des Muldenschiebeziegels bilden und dann verdeckt unterhalb von Firstziegeln bzw. von besonders ausgebildeten Abdeckziegeln in einen Bereich unterhalb des Daches geführt sind, wo sie in einen Kollektorsammler münden. Es sind mithin die Bereiche des Vakuumsolarkollektors in den Außenbereich der Dacheindeckung geführt, die für die Erwärmung des Kollektormediums Sorge tragen. Ansonsten ist der Muldenschiebeziegel, der als Solarziegel ausgebildet ist, in keiner Weise hinsichtlich seiner sonstigen Dacheindeckungseigenschaften zu verändern. Lediglich die weitere Mulde bzw. weitere Mulden, wenn der Muldenschiebeziegel mehr als zwei Mulden aufweist, sind in dem Bereich so ausgebildet, dass die Vakuumsolarröhre den Ziegel in dem Bereich zu der Mittelwulst komplettiert, so dass die Vakuumsolarröhre integraler Bestandteil der Dacheindeckung wird. Insgesamt, insbesondere dann, wenn die Vakuumsolarröhre auch noch entsprechend der Dachfarbe gestaltet ist, ergibt sich insgesamt ein ausgesprochen harmonisches Gesamterscheinungsbild der Dacheindeckung, so dass die Dacheindeckung ohne weiteres in sehr weiten Bereichen mit Solarziegeln zu versehen ist, obgleich auch Bereiche verbleiben können, die mit herkömmlichen Muldenschiebeziegeln eingedeckt sind. Viele Bereich des Vakuumsolarröhrenkollektors, die nicht unmittelbar zur Aufheizung des Kollektormediums dienen, sind unterhalb der Dacheindeckung unterzubringen wie z.B. Kollektorsammler, Anschlussrohre, Pumpen und dergleichen mehr und sind mithin nicht mehr den Witterungseinflüssen ausgesetzt.

Weitere vorteilhafte Ausgestaltungen der Dacheindeckung ergeben sich aus den Ansprüchen 2 und 5.

Ein Dachziegel, der als Solarziegel ausgebildet ist, ist Gegenstand des Anspruches 6. Vorteilhafte Ausgestaltungen dieses als Solarziegel ausgebildeten Dachziegels sind in den Ansprüchen 7 bis 9 angegeben.

Um auch außerhalb eines Firstziegels Vakuumröhren z.B. zu einer Kollektorsammlung innerhalb der Dachfläche zu führen, kann ein Dachziegel auch als Abdeckziegel gestaltet sein und der Mittelwulstbereich oberseitig oder unterseitig mit einem endseitig offenen Kopfstück zur Aufnahme einer Solarvakuumröhre eines Vakuumsolarröhrenkollektors ausgebildet ist.

Somit können einzelne Dachbereiche, auch mitten in einer Dachfläche, mit den Vakuumröhren versehen werden, wobei auch innerhalb dieser Dachfläche die entsprechenden Vakuumröhren über den als Abdeckziegel ausgebildeten Dachziegel in den Bereich eines unterhalb der Dacheindeckung gelegenen Röhrenkollektors geführt werden können.

Hinsichtlich wesentlicher weiterer Ausgestaltungen wird auf die Zeichnung und die weitere Beschreibung verwiesen. In der Zeichnung zeigen:
- Fig. 1: eine schematische perspektivische Draufsicht auf ein Ausführungsbeispiel einer Dacheindeckung (ausschnittsweise);
- Fig. 2: eine Längsschnittdarstellung durch einen Mittelwulstbereich der Dacheindeckung nach Fig. 1;
- Fig. 3: eine Seitenansicht der Dacheindeckung nach Fig. 1;
- Fig. 4: eine perspektivische Darstellung eines Ausführungsbeispeils einer relativ flach verlaufenden Dacheindeckung;
- Fig. 5: eine Seitendarstellung im Bereich der Mittelwulst von Dachziegeln der Dacheindeckung nach Fig. 4;
- Fig. 6: eine Querschnittsdarstellung im Bereich von Abdeckziegeln der Dacheindeckung nach Fig. 4;
- Fig. 7: eine perspektivische Darstellung analog Fig. 1 mit Einführung von Vakuumröhren im Firstbereich;
- Fig. 8 u. 9: analoge Darstellungen zu den Fig. 2 und 3;
- Fig. 9: ein Ausführungsbeispiel analog gemäß Fig. 7 und 4 mit flach verlaufender Dacheindeckung;
- Fig. 10: eine analoge Darstellung zu Fig. 5 und
- Fig. 11: eine analoge Darstellung zu Fig. 6 des Ausführungsbeispiels nach Fig. 9.

In der Zeichnung sind allgemein übereinstimmende Teile mit identischen Bezugsziffern versehen. Allgemein mit 1 ist eine Dacheindeckung beschrieben, die beispielsweise zum überwiegenden Teil mit einem großflächigen Zwei-Mulden-Schiebeziegel 2 eingedeckt ist, wie dieser im wesentlichen in der deutschen Patentschrift 101 43 582 C1 (Dachziegel Nibra DS5) beschrieben ist. Ein solcher Dachziegel hat eine Überdeckungswulst 2 sowie eine Mittelwulst 4 und eine Seitenverfalzung 5. Zwischen der Mittelwulst 4 und der Überdeckungswulst 3 sowie zwischen der Mittelwulst 4 und der Seitenverfalzung sind jeweils Längsmulden 6 vorgesehen.

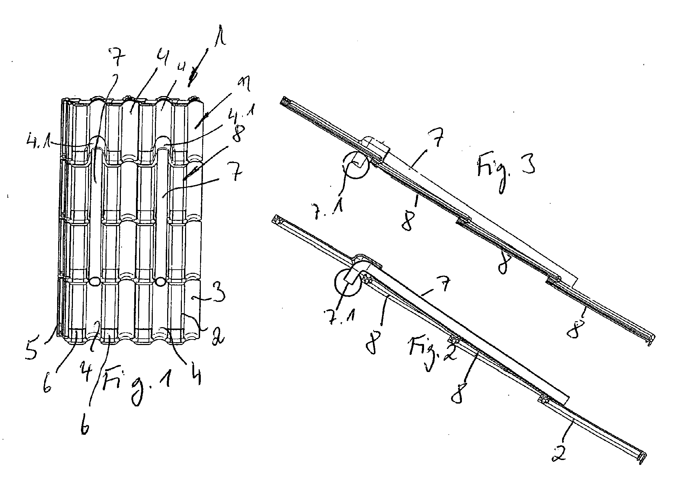

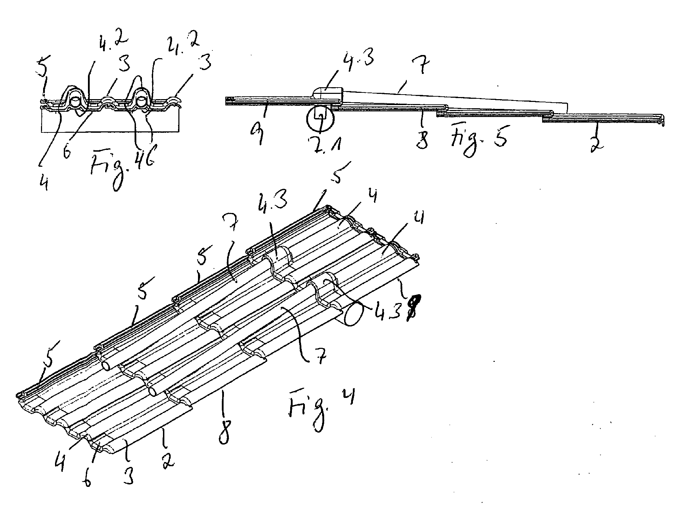

Ein Teil der Dacheindeckung 1 ist mit Vakuumsolarröhren 7 ausgestattet. In diesen Bereichen sind die Muldenschiebeziegel als besondere Solarziegel 8 ausgebildet, die einen Mittelwulstbereich 4 haben, der nicht insgesamt im Ziegel selbst ausgebildet ist, sondern zu dem Mittelwulstbereich teilweise durch die Vakuumsolarröhren komplettiert ist. Im Mündungsbereich der Vakuumsolarröhren schließen sich an einen solchen Solarziegel 8 in dem Ausführungsbeispiel nach Fig. 1 ein als Abdeckziegel 9 ausgebildete Muldenschiebeziegel an, bei dem die Mittelwulst 4 endseitig offen ist im Bereich eines Kopfstückes 4.1. Dieses wird von dem Mündungsbereich einer Vakuumsolarröhre 7 durchgriffen, das dort mit einem abgewinkelten Ende 7.1 versehen ist. Wie im einzelnen ein Solarziegel 8 im Bereich der Mittelwulst gestaltet ist, ist näher den Fig. 6 zu entnehmen. Dort ist ein rinnenartiger Bereich 4.2 vorgesehen, in den die Vakuumsolarröhre 7 eingebettet werden und sicher abgestützt werden kann. Der sich anschließende Teilkreisbereich der Vakuumsolarröhre ähnelt von der optischen Gestaltung dann der Überdeckungswulst 3 - von außen her betrachtet.

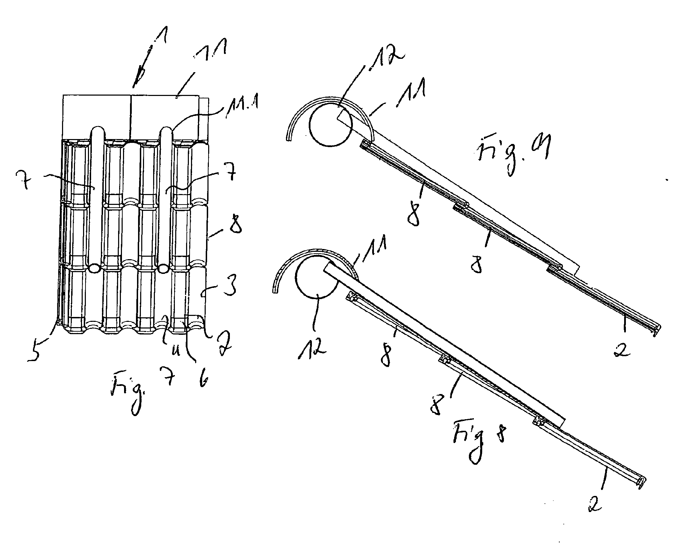

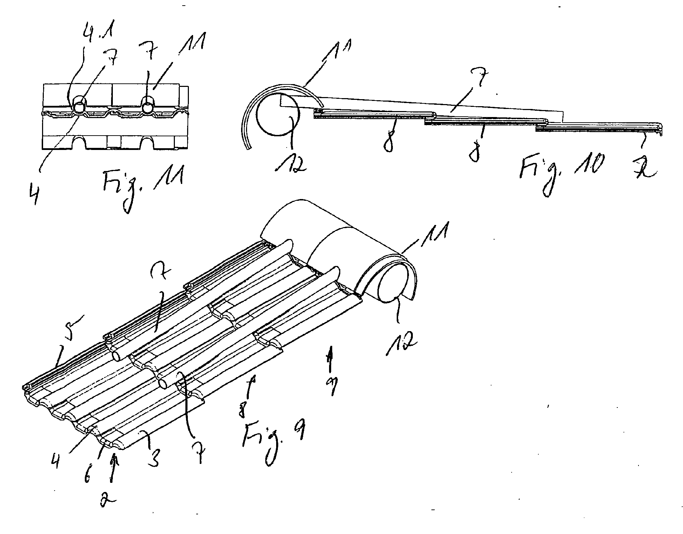

Im Bereich der Mittelwulst 4 des Abdeckziegels 9 ist die Mittelwulst 4 kopfendseitig mit einem Kopfstück 4.3 versehen. Dort kann auch durch geeignete Abdichtmaßnahmen die Vakuumsolarröhre 7 witterungsfest mit dem Abdeckziegel 9 verbunden sein. In den Ausführungsbeispielen nach den Fig. 7 bis 11 ist bei einem ansonsten analogen Aufbau der beteiligten Teile die Vakuumsolarröhre 7 bis in den Firstbereich der Dacheindeckung 1 geführt. Dort sind besondere Firstziegel 11 vorgesehen, die eine Öffnung 11.1 haben, durch die die Vakuumröhren in das Innere geführt sind zu einem Sammelkollektor 12. Weitere Teile des Solarkollektors wie weitere Kollektorsammler, Zu- und Ableitungen und dergleichen sind auch unterhalb der Dacheindeckung 1 angeordnet, vorliegend jedoch aus Gründen der besseren Übersichtlichkeit nicht dargestellt.

## Patentansprüche

1. Dacheindeckung (1) mit großflächigen Muldenschiebeziegeln (2), insbesondere Zwei-Mulden-Schiebeziegeln, sowie mit Firstziegeln (11) zum firstseitigen Abschluss der Dacheindeckung (1) und mit einem der Dacheindeckung (1) zugeordneten Vakuumsolarröhrenkollektor, **dadurch gekennzeichnet, dass** zumindest ein Teil der Muldenschiebeziegel als Solarziegel (8) ausgebildet ist, denen Vakuumsolarröhren (7) des Vakuumsolarröhrenkollektors, die parallel neben einer Überdeckungswulst (3) eines Ziegels (8) jeweils mit Abstand angeordnet und Teil einer jeweiligen Mittelwulst des Ziegels bilden, zugeordnet sind, wobei die Vakuumsolarröhren (7) Teil von mehreren, übereinander angeordneten Solarziegeln (8) sind und in einen unterhalb von Firstziegeln (11) und/oder unterhalb von als Abdeckziegel (9) ausgebildeten Muldeschiebeziegeln angeordneten Kollektorsammler (12) des Vakuumsolarröhrenkollektors münden.

2. Dacheindeckung nach Anspruch 1, **dadurch gekennzeichnet, dass** die Abdeckziegel (9) eine Mittelwulst (4) haben, die und/oder unten offen zur Einführung einer Vakuumsolarröhre (7) ist.

3. Dacheindeckung nach Anspruch 1 oder 2, **dadurch gekennzeichnet, dass** die Vakuumsolarröhre (7) im Bereich ihrer Mündung in den Kollektorsammler (12) abgewinkelt (7.1) ausgebildet ist.

4. Dacheindeckung nach einem der Ansprüche 1 bis 3, **dadurch gekennzeichnet, dass** die Vakuumsolarröhre (7) eine einer Ziegelwulst (3) entsprechende äußere Gestaltung hat.

5. Dacheindeckung nach einem der Ansprüche 1 bis 4, **dadurch gekennzeichnet, dass** die Vakuumsolarröhre (7) ein der Dachfarbe der Dacheindeckung (1) entsprechendes äußeres Aussehen hat.

6. Dachziegel mit einer an einem seiner Seitenbereich vorgesehenen Überdeckungswulst (3) und einer an einem anderen Ende ausgebildeten Seitenverfalzung (5), die mit einer Überdeckungswulst (3) eines seitlich benachbart anzuordnenden Dachziegels eines Daches zu verbinden ist, wobei zwischen der Überdeckungswulst (3) und der Seitenverfalzung (5) zumindest ein weiterer Mittelwulstbereich (4) und zwischen der Überdeckungswulst (3) und dem Mittelwulstbereich (4) sowie zwischen dem Mittelwulstbereich (4) und der Seitenverfalzung (5) jeweils Längsmulden (6) ausgebildet sind, **dadurch gekennzeichnet, dass** der Dachziegel als Solarziegel (8) mit einer im Mittelwulstbereich (4) vorzusehenden Solarvakuumröhre (7) eines Vakuumsolarröhrenkollektors ausgebildet ist, wobei die Solarvakuumröhre einen abgeflachten, die Solarvakuumröhre aufnehmenden, zwischen den Längsmulden (6) gelegenen Dachziegelbereich zu dem von außen her sichtbaren Mittelwulstbereich (4) komplettiert

7. Dachziegel nach Anspruch 6, **dadurch gekennzeichnet, dass** der Dachziegel (5) im Bereich der Mittelwulst (4) einer Teilmantelfläche der Solarvakuumröhre entsprechende rinnenförmige Ausformung (4.1) zur Anordnung der Solarvakuumröhre hat.

8. Dachziegel nach Anspruch 6 oder 7, **dadurch gekennzeichnet, dass** die Solarvakuumröhre (7) innenseitig einen Reflektor aufweist.

9. Dachziegel nach einem der Ansprüche 6 bis 8, **dadurch gekennzeichnet, dass** die Vakuumsolarröhre (7) verdrehbar und mithin einstellbar ausgebildet ist.

10. Dachziegel mit großflächigen Muldenschiebeziegeln (2), insbesondere Zwei-Mulden-Schiebeziegeln, sowie mit Firstzlegeln (11) zum firstseitigen Abschluss der Dacheindeckung (1) und mit einem der Dacheindeckung (1) zugeordneten Vakuumsolarröhrenkollektor , **dadurch gekennzeichnet, dass** der Dachziegel als Abdeckziegel ausgebildet ist und der Mittelwulstbereich (4) oberseitig oder unterseitig mit einem endseitig offenes Kopfstück (4.3) zur Aufnahme einer Solarvakuumröhre (7) eines Vakuumsolarröhrenkollektors ausgebildet sind.
